(19) **Europäisches Patentamt**
**European Patent Office**
**Office européen des brevets**

(11) Publication number: **0 101 400**
**A2**

(12) # EUROPEAN PATENT APPLICATION

(21) Application number: **83630122.6**

(22) Date of filing: **28.07.83**

(51) Int. Cl.³: **B 60 C 9/18**

(30) Priority: **11.08.82 US 407186**

(43) Date of publication of application:
**22.02.84 Bulletin 84/8**

(84) Designated Contracting States:
**DE FR GB IT**

(71) Applicant: **THE GOODYEAR TIRE & RUBBER COMPANY**
**1144 East Market Street**
**Akron, Ohio 44316(US)**

(72) Inventor: **Abbott, John Ronald**
**3501 Northampton Road**
**Cuyahoga Falls Ohio 44221(US)**

(72) Inventor: **Goldstein, Arthur Allen**
**6811 Mayfield Road Apt 1278**
**Mayfield Heights Ohio 44124(US)**

(72) Inventor: **Olsen, Richard Joseph**
**3309 Grandview Drive**
**San Angelo Texas 76904(US)**

(74) Representative: **Weyland, Joseph Jean Pierre**
**Goodyear International Tire Technical Center Patent**
**Department Avenue Gordon Smith**
**L-7750 Colmar-Berg(LU)**

(54) **A pneumatic tire.**

(57) A pneumatic radial tire 10 having a plurality of annular semi-rigid bands 24,26 disposed in the crown portion of the tire. The bands extend substantially across the ground engaging tread portion 12 of the tire 10.

FIG.1

EP 0 101 400 A2

Croydon Printing Company Ltd

0101400

-1-

## A PNEUMATIC TIRE

The foregoing abstract is not to be taken as limiting the invention of this application, and in order to understand the full nature and extent of the technical disclosure of the application, reference must be made to the accompanying drawings and the following detailed description.

The present invention relates to pneumatic tires and more particularly to a reinforcing structure which is disposed in the crown portion of a radial tire.

It is known in the prior art that radial type tires, that is, tires having a reinforcing carcass structure wherein the cords are disposed substantially radially with respect to the mid-circumferential centerplane of the tire, require some reinforcement in the crown area of the tire. In a conventional pneumatic tire, this is typically accomplished by providing a reinforcing ply structure comprising a plurality of parallel cords. This structure is quite flexible and is not capable of supporting a significant load without internal pressure.

It has been suggested in the prior art the placement of a rigid hoop structure in the crown area of the tire, for example as shown in U.S. Patent No. 4,111,249. However, the reinforcing structure of this patent has certain limitations which restrict its design flexibility. Applicants' invention is directed to a reinforcing structure for placement in the crown area of a radial tire which provides a high degree of design flexibility. The tire of the present invention can be designed to operate more efficiently by redistributing the stresses in a tire and accounting for irregularity in the road while maintaining other desired performance characteristics such as cornering, traction, and handling. Applicants' invention also provides a structure which provides the desired performance characteristics in the inflated, underinflated and uninflated conditions while maintaining durability of the tire.

## Description of the Drawings

Figure 1 is a cross-sectional view of half a tire illustrating the reinforcing structure made in accordance with the present invention;

Figure 2 is a cross-sectional view similar to figure 1 illustrating a modified form of the present invention;

Figure 3 is a cross-sectional view of a tire illustrating yet another modified form of the present invention;

Figure 4 is a cross-sectional view of a tire illustrating another form of the present invention;

Figure 5 is a cross-sectional view of a tire illustrating yet another modified form of the present invention; and

Figures 6 and 7 are diagrammatical representations illustrating how the tire stiffness and band stiffness can be determined for a tire of the present invention.

## Detailed Description of the Present Invention

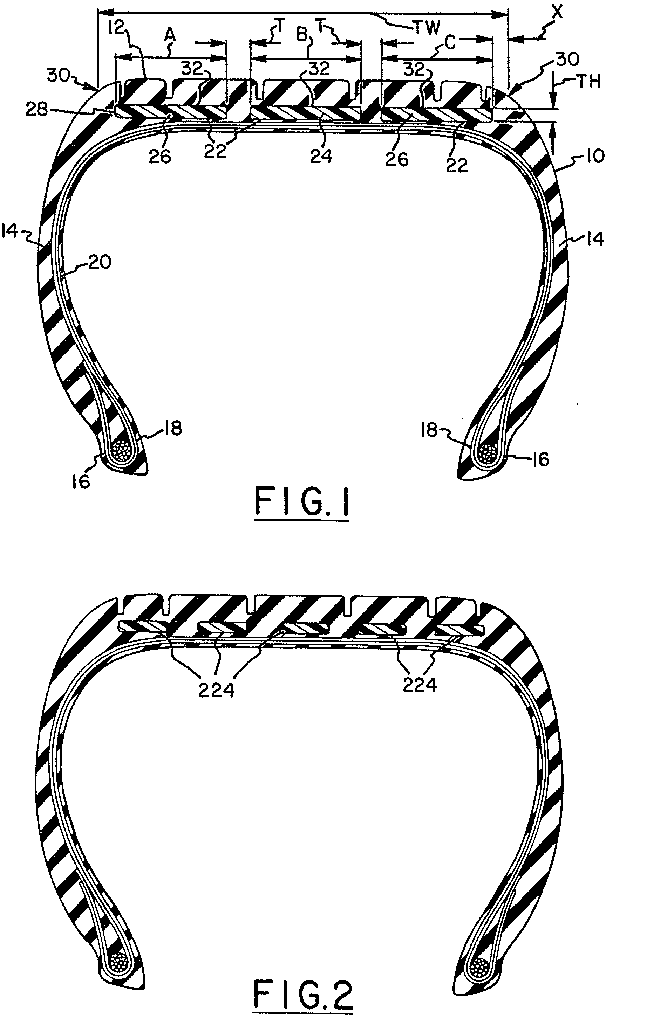

Referring to figure 1, there is illustrated a pneumatic tire 10 made in accordance with the present invention. The tire 10 comprises a ground-engaging tread portion 12, a pair of sidewall portions 14 one extending from each of the lateral ends of the ground-engaging tread portion 12 radially inwardly terminating in a bead portion 16. Each bead portion 16 having an annular substantially inextensible bead core 18. A reinforcing carcass ply structure 20 extends from one of the bead cores 16, through

sidewall 14, tread portion 12 and the other sidewall 14 terminating at the other bead core 16, the lateral ends of the carcass reinforcing structure being wrapped about its respective bead core 18. The carcass reinforcing ply structure comprises at least one layer of parallel cords. In the particular embodiment illustrated, the carcass reinforcing ply structure comprises two ply layers and the tire 10 is a passenger tire and is of the radial type construction. For the purposes of this invention, the radial type construction is a tire wherein the cords of the reinforcing ply structure lie at an angle in the range of seventy-five degrees (75°) to ninety degrees (90°) with respect to the mid-circumferential centerplane of the tire.

Disposed radially outward of reinforcing carcass ply structure 20 in the ground-engaging tread portion 12, is a tread reinforcing structure 22 which comprises at least two separate thin bands. In the particular embodiment illustrated, the tread reinforcing structure comprises a central band 24 and two side bands 26. The bands 24,26 each comprise a fiber reinforcement embodied in an epoxy resin matrix thereby forming a semi-rigid hoop structure. The bands of the present invention are sufficiently rigid so as to provide some load support when the tire is in the inflated condition, but is also sufficiently flexible so as to flaten when in the footprint of the tire. The bands are made by passing a strand of fabric reinforcement through an epoxy resin mixture and then wrapping the fabric about a cylindrical building mandrel having the desired diameter and configuration. In the particular embodiment illustrated, the fiber reinforcement comprises 1062 fiberglass roving purchased from the Pittsburgh Plate Glass Company having the following properties:

type of stand:   ECK 37

fiber diameter:   K (x .00052 in. nominal) fibers/strand:   nominal 400

strand weight:   (grams/yard/end) .113-132 roving yield (8 strands):   462 yds/lb.

type of binder:   silane

percent of binder (by wt. of glass): 0.55 + - .15 The expoxy resin mixture used comprises in parts by weight of the following:

90 EPON 828 purchased from Shell Corporation (epoxy resin)

80 Nadic Methyl Anhydride (Curing Agent)

5 Kelpoxy G272-100 purchased from Spencer-Kellogg (Flexibilizer)

5 Kelpoxy G293-100 purchased from Spencer-Kellogg (Flexibilizer)

1 Benzyl Dimethyl Amine purchased from Sherman Williams (Catalyst).

It is understood that while the foregoing has specifically described the fiber reinforcement and expoxy resin matrix, there are various other fiber reinforcements and resin mixtures that can be used as is well known in the art.

The fabric reinforcment, i.e . the roving used in the present invention, is wrapped about the building mandrel at an angle which may vary from zero degrees (0°) to forty-five degrees (45°) with respect to the mid-circumferential centerplane of the building mandrel, preferably the reinforcement is oriented at an angle in the range of three to twenty degrees (3° to 20°). In the particular embodiment illustrated, the fiber reinforcement is oriented at an angle of 5°. While the present invention illustrates bands 24,26 each being made from the same material with the same construction, the present invention is not so limited. The present invention invisions that the bands of reinforcing structure 22 be mixed in any desired manner so as to provide for the desired performance.

It is further understood that while applicants have described a particular method of constructing the bands of the present invention, the present invention is not so limited as the bands may be made in any desired manner known to those skilled in the art.

The tread reinforcing structure 22 of the present invention provides a stiffness not found in normal reinforcing structures of the prior art. In order to provide sufficient restrictive force on the tire during the inflated condition and the required load supporting characteristics in the underinflated and uninflated conditions, the reinforcing structure extends substantially across the tread. The total supporting band width TBW of the bands 24,26 should be at least approximately eighty percent (80%) of the tread width TW of the tire, preferably of at least ninety percent (90%). In the particular embodiment illustrated, the total supporting band width TBW is approximately ninety-five percent (95%). For the purposes of this invention, the tread width TW is a maximum distance across the tread as taken from the footprint of the tire inflated to design inflation pressure and at rated load measured perpendicular to the mid-circumferential centerplane of the tire.

The bands 26 each have an axially outer edge 28 which is disposed from the closest respective tread edge 30 a distance x no greater than about ten percent (10%) of the tread width TW. Preferably, the distance x is no greater than about five percent (5%) of TW.

The tread edge 30 of the tire for the purposes of this invention is the axially outermost point which comes in contact with the surface upon which the tire is intended to be used.

The bands 24,26 are preferably spaced apart an axial distance T no greater than the nominal thickness TH of the thickest band. Preferably, the bands are spaced an axial distance apart T no greater than about one-half inch (.5 inch, 1.27 cm) and preferably no greater than .1 of an inch (.254 cm).

The bands 24,26 each have a thickness TH approximately one-fourth of an inch (.635 cm). However, the thickness TH will of course vary in accordance to the particular materials selected for the band, the angle of orientation of the fabric reinforcement and the stiffness desired for each band. Generally, for a passenger tire, the thickness TH will range from about .2 inch (.508 cm) to about .3 inch (.862 cm) for a fiberglass epoxy band.

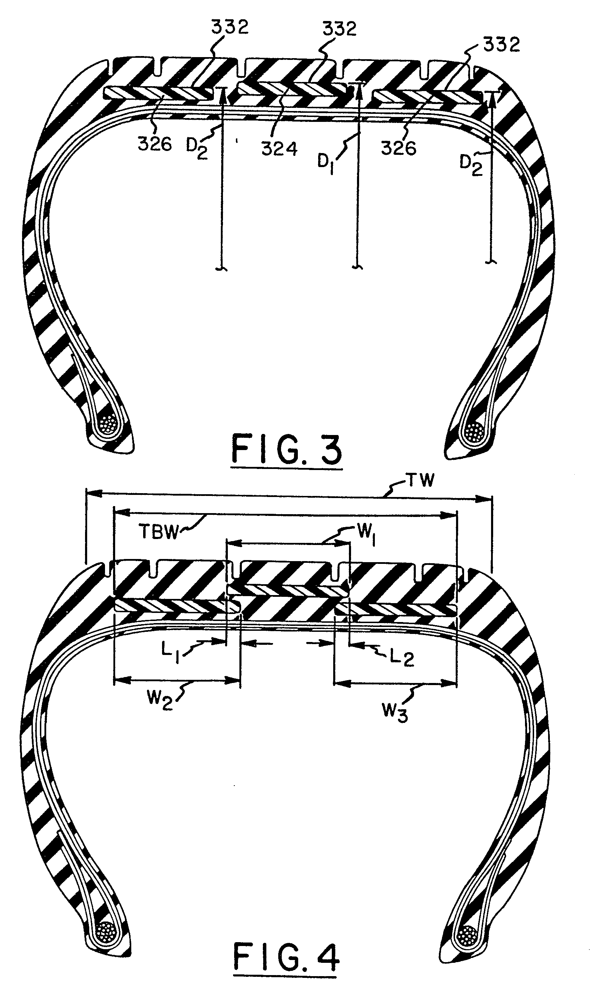

In the particular embodiment illustrated, the bands 24,26 have substantially equal width, that is, the width A and B of bands 24,26 respectively are equal to about one-third of the total supporting band width TBW. For the purposes of this invention, the total supporting band width TBW in most instances is the summation of the width of each individual band. However, this may not always be so. Referring to figure 4, there is illustrated a modified form of the present invention wherein the bands 424,426 overlap each other for at least a portion of their width. In such event, the total supporting band width TBW is the summation of the width of each individual band minus the amount by which the bands overlap each other. For example, in figure 4 the total supporting band width TBW is equal to the summation of bands 24,26 minus the

overlapping portion thereof (TBW = $W_1$ + $W_2$ + $W_3$ - $L_1$ - $L_2$) $W_1$, $W_2$ and $W_3$ being the width of the bands and $L_1$ $L_2$ being the length of the overlapping portions. Alternately stated, TBW of figure 4 is the maximum axial width across the reinforcing structure 422 extending from lateral edge 428 to lateral edge 428. The bands should not overlap by more than fifty percent (50%) of their width, preferably no greater than twenty-five percent (25%) of their width.

While the embodiment illustrated in figure 1 illustrates three bands of substantially equal width, the present invention is not so limited. For example, the center band 24 may have a width A in the range of twenty-percent (20%) to sixty percent (60%) of the total supporting band width TBW and each side band 26 may have a width B ranging from twenty percent (20%) to forty percent (40%) of the total band width TBW. The bands should have a width at least equal to the thickness of the band, preferably at least twice the thickness of the band.

Referring to figure 2, there is illustrated a modified form of the present invention where there is provided five individual bands 224 of substantially equal width. In the preferred practice of the present invention for a passenger tire, it is preferred that there be provided at least three separate bands spaced axially apart and preferably no greater than seven bands spaced axially apart. The stresses developed in the ground-engaging tread portion of a passenger tire can generally be divided into three distinct areas, a central area and two shoulder areas. The use of three to seven separate bands axially spaced apart provide for the capability of having different areas of the tread portion reinforced with bands having different physical properties. For example, if desired, the band or bands in the central portion of the tread may be thicker, have a different construction, or be made of different material having stiffer physical properties thereby providing additional support in the central portion and relieving some of the stresses in the bands in the shoulder areas. Generally, the bands in the shoulder area experience greater transverse bending stresses as compared to the bands in the central portion of the tread, a reinforcing band structure made in accordance with the present invention can be constructed to take this into account thereby providing a more durable tire. In this way, an efficient reinforcing structure can be provided without sacrificing other desired physical performance characteristics of the tire.

In the embodiment illustrated in figure 1, the radially outer surface 32 of bands 24,26 have substantially the same diameter. However, it may be desired that the outer surfaces 32 have different diameters so as to relieve certain stresses from other bands in the tire and/or for the obtaining of improved performance characteristics, such as tracking or handling. Referring to figure 3, there is illustrated an embodiment wherein the radially outer surface 332 of band 324 is greater than the radially outer surface 332 of side bands 326. The center band 324 has a predetermined radially outer diameter $D_1$ and side bands 326 each have a predetermined radially outer diameter $D_2$. In situations wherein the bands do not overlap such as illustrated in figure 3, it is desired that the diameter $D_2$ be not greater than approximately one-half inch greater than $D_1$ for a passenger vehicle tire.

Applicants have found that for efficient operation of the tire in the inflated, underinflated and uninflated conditions, the ultimate strength S of the tread reinforcing structure 22 divided by the modulus E thereof to the two-thirds power be greater or equal to three ($3 \leq \frac{S}{E^{\frac{2}{3}}}$) preferably between 3.0 and 7.0. The modulus E of the reinforcing structure 22 and the ultimate strength S may be determined by ASTM procedure D790-71.

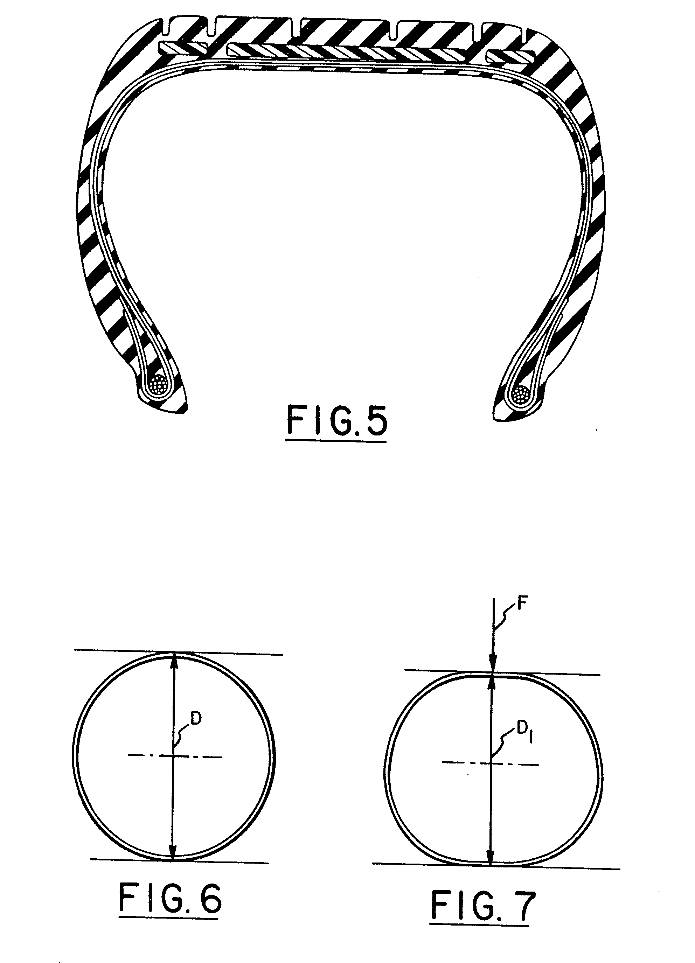

In a pneumatic tire that is primarily designed for runflat capabilities (capable of being operated without any internal tire pressure for a limited time at limited speed), applicants have found that the band stiffness should have a specific relationship to the tire stiffness. Applicants have found that for a tire designed for runflat capabilities, it is desired that the tire band stiffness be from four percent (4%) to ten percent (10%) of the tire stiffness, preferably from five percent (5%) to seven percent (7%). In the particular embodiment illustrated in figure 1, the band is primarily designed for runflat capability and has a band stiffness equal to about 5.7 percent of the tire stiffness. Referring to figures 6 and 7, there is illustrated a diagrammatical representation as to how the band stiffness can be measured. Figures 6 and 7, illustrate two side views of a hoop made in accordance with the present invention. Figure 6 illustrates a hoop in the unloaded condition whereas figure 7 illustrates a hoop in the loaded condition. It can be seen that the unloaded band has a diameter D whereas the loaded band has a diameter $D_1$ when a force (load) F is applied. The band stiffness $K_B$ is equal to the measured load at deflection of one inch divided by the deflection ($K_B = \frac{F}{D - D_1}$). In the particular embodiment illustrated, the band has a stiffness of approximately sixty-five pounds per inch (65 lb/in.) (11.608 kg/cm). For the purposes of the present invention, the tire stiffness $K_T$ is determined by a tire having the same structure as a tire with a band, except that in place of the reinforcing bands or hoops of the present invention there is provided a typical reinforcing steel belt cord ply structure used in the prior art. The tire stiffness $K_T$ is equal to the rated load L divided by deflection resulting from the load at design inflation pressure $(K_T = \frac{L}{R_2 - R_1})$. For the purposes of this invention, the tire stiffness $K_T$ is measured from a tire mounted on a wheel which it is designed to be used on and loaded at the axis of the wheel, $R_2$ being the radius of the tire unloaded and $R_1$ being the raidus of the tire at rated load (therefore $R_2$ $R_1$ is equal to the vertical displacement of the axis of the wheel). Applicants have found that when a passenger tire size FR70-14 was made identical to a tire of the present invention except that two reinforcing cut belt cord ply layers were used in the tread reinforcement, the tire stiffness $K_T$ was equal to approximately 1024 pounds per inch (182.9 kg/cm). The cords of each ply layer are comprised of four strands of steel filaments twisted together, each filament having a diameter of .25 mm (4 x 25). The cords in each layer were oriented at an angle of about 23° with respect to the midcircumferential centerplane of the tire, the cords in one layer being oppositely disposed with respect to the cords in the other layer. The cord end count for each layer was about 20 ends per inch.

It is understood that various modifications of the present invention can be made without departing from the spirit or scope of the present invention. For example, and not by way of limitation, the fiber reinforcement used in the bands of the reinforcing structure may be made of a different material or have a variety of different constructions. This is equally true with respect to the type of epoxy resin matrix used. Further, the bands of the present invention may be used in closed torus type tire constructions known to those skilled in the art. Additionally, the reinforcing bands may be disposed between adjacent carcass ply layers or radially inwardly of the carcass ply structure if desired.

WE CLAIM:

1. A radial tire having a ground-engaging tread portion having a pair of axially opposed tread edges, a pair of sidewall portions one extending from each of said lateral edges radially inwardly terminating in a bead portion, each of said bead portions having an inextensible reinforcing member therein, at least one fabric reinforcing ply structure extending from bead portion to bead portion through said sidewall portions and tread portion, characterized by an annular reinforcing structure disposed in said tread portion extending about the circumference of said tire, said annular reinforcing structure comprising a plurality of relatively annular bands which are disposed substantially across the width of said tread, each of said bands having a width of at least equal to the radial thickness of each of said bands.

2. The tire according to claim 1 further characterized by the total supporting band width is at least eighty percent (80%) of the tread width of said tire.

3. The tire according to claim 1 further characterized by the total supporting band width is at least ninety-five percent (95%) of the tread width of said tire.

4. The tire according to claim 1 further characterized by the axially outer bands of said annular reinforcing structure being disposed from the closest respective tread edge a distance no greater than approximately ten percent (10%) of the tread width of the tire.

5. The tire according to claim 1 further characterized by each of said bands being spaced apart from each other an axial distance no greater than the nominal thickness of the thickest band.

6. The tire according to claim 1 further characterized by each of said bands being spaced a distance axially apart no greater than approximately one-half inch (1.27 cm).

7. The tire according to claim 1 further characterized by said reinforcing structure comprises a center band and two side bands, one side band being disposed on each side of said center band.

8. The tire according to claim 7 further characterized by said center band being spaced apart from each of said side bands a distance no greater than one-tenth of an inch (.254 cm).

9. The tire according to claim 7 further characterized in that said center band has a width which is in the range of twenty-percent (20%) to sixty-percent (60%) of the total supported band said side bands each having a width in the range of twenty to forty percent (20% to 40%) of the total band supporting width.

10. The tire according to claim 7 further characterized by said center band and said side bands each having a width of approximately one-third of the total supporting band width.

11. The tire according to claim 1 further characterized by each of said bands having a radially outer surface, said diameter of the radially outer surface of each of said bands being no greater than twice the nominal band thickness of the thickest band.

12. The tire according to claim 1 further characterized by each of said bands having a radially outer surface, each radially outer surface having a predetermined diameter, the difference between the diameter of each of said bands being no greater than one-half inch (1.27 cm) the nominal band thickness of the widest band.

13. The tire according to claim 7 further characterized by the radially outer surface of said side bands being equal to or less than the diameter of the radially outer surface of said center band.

14. The tire according to claim 13 further characterized by the difference in diameter between the radially outer surface of said side bands and said center band is no greater than one-half inch (1.27 cm).

15. The tire according to claim 1 further characterized by each of said bands being made of a composite material comprising a plurality of fibers embedded in a resin matrix.

16. The tire according to claim 15 further characterized by said fibers being selected from one of the following materials comprising of fiberglass, aramid, carbon, wire and said resin matrix being of the epoxy type.

17. The tire according to claim 15 further characterized by said fibers are oriented at an angle in the range of zero degrees to forty-five degrees with respect to the mid-circumferential centerplane of said tire.

18. The tire according to claim 15 further characterized by said fibers are oriented at an angle with respect to the mid-circumferential centerplane of said tire in the range of five degrees to twenty degrees.

19. . The tire according to claim 1 further characterized by the ultimate strength of the annular reinforcing structure divided by the modulus of the reinforcing structure to the two-thirds power being greater or equal to three.

20. The tire according to claim 1 futher characterized by the ultimate strength of the annular reinforcing structure divided by the modulus of the reinforcing structure to the two-thirds power being greater or equal to 3.0 and equal to or less than 7.0.

21. The tire according to claim 1 further characterized by the stiffness of the annular reinforcing structure being in the range of about four percent (4%) to ten percent (10%) of the tire stiffness.

22. The tire according to claim 1 further characterized by the stiffness of the annular reinforcing structure being in the range from about five percent (5%) to seven percent (7%) of the tire stiffness..

23. The tire according to claim 1 further characterized by the the stiffness of the annular reinforcing structure to the tire stiffness is 5.7%.

FIG.1

FIG.2

FIG. 3

FIG.4

FIG.5

FIG.6

FIG.7